# EUROPEAN PATENT SPECIFICATION

(11) **EP 4 431 248 B1**
(45) Date of publication and mention of the grant of the patent: **29.10.2025**
(21) Application number: 24161033.6
(22) Date of filing: 01.03.2024
(51) Int. Cl.: B25J 9/10

(54) **ROBOT AND ROBOT SYSTEM**
ROBOTER UND ROBOTERSYSTEM
ROBOT ET SYSTÈME DE ROBOT

(30) Priority: 17.03.2023 JP 2023042748
(43) Date of publication of application: 18.09.2024
(73) Proprietor: Seiko Epson Corporation, Tokyo 160-8801 (JP)
(72) Inventor: MIYASAKA, Hidekatsu, Suwa-shi, Nagano, 392-8502 (JP)
(74) Representative: MERH-IP Matias Erny Reichl Hoffmann Patentanwälte PartG mbB

(56) References cited:
- JP-A- 2007 050 499
- JP-A- 2023 006 866
- JP-A- H02 160 497
- JP-A- S60 123 280
- JP-B2- 5 360 288
- US-A1- 2015 246 450
- US-A1- 2020 368 895

## Description

### BACKGROUND

### 1. Technical Field

The present disclosure relates to a robot and a robot system.

### 2. Related Art

JP-A-11-123690 discloses a robot including a first arm and a second arm rotatably coupled to the first arm via a joint. The robot includes a stopper restricting an angle between the first arm and the second arm to a predetermined angle or more. The stopper includes a fixed-side stopper provided in the first arm and a movable-side stopper provided in the second arm. The movable-side stopper comes into contact with the fixed-side stopper, and thereby, the angle between the arms is restricted to the predetermined angle or more.

In the robot disclosed in JP-A-11-123690, it is considered that the first arm and the second arm may be damaged due to an impact when the movable-side stopper comes into contact with the fixed-side stopper.

US2015/246450A1 discloses a structure of each fixing device in a robot R. A mounting part of the fixing device is mounted to a lower arm, and an abutting part of the fixing device abuts against an abuttable part on the swivel base. More specifically, 16 screw holes are formed on the mounting location of the fixing devices to the lower arm. The mounting part of each fixing device is mounted to the lower arm by two mounting screws SC which are inserted in the long hole LH. The dimension of the long hole LH in the extension direction is sufficiently larger than the length of the arc which connects two adjoining screw holes SH.

JPS60123280A discloses that a robot body consists of a cylindrical base and a movable frame rotatably supported on the cylindrical base. On the outer surface of the movable frame 3, a pair of contact pieces 5A and 5B are attached to the outer surface of the movable frame 3 opposite to each of the contact surfaces 42A and 42B. The contact pieces 5A and 5B are provided with long holes 51A and 51B along the axial direction of the movable frame 3. By inserting adjustment bolts 6 into the long holes and tightening them to the outer surface of the movable frame 3, the vertical mounting position of each contact piece can be adjusted.

JP2007050499A discloses that a stopper block is adhered to a second arm 4 by inserting a 5mm-diameter bolt 13 through the insertion hole 22 that forms the above shape. A contacting portion of the stopper block is adhered to the tip side of the stopper block 21, and is assumed to have contacted the stopper (second stopper member) fixed to the tip side. Then, an excessive load is applied to the stopper block, and the base slides on the contact surface with the second arm. JP2023006866A discloses a robot with a base, a shoulder section, a lower arm, a first upper arm, a second upper arm, a wrist section, and a flange. The shoulder section is supported by base to rotate about a first axis. A mechanical stopper device sets the mechanical rotation limits between the enclosure and the enclosure. The mechanical stopper device has a first stopper, a second stopper, bolts, etc.

JP5360288B2 discloses an outer contour of a second link has a groove extending from the through hole toward the direction of impact of the stopper block on the stopper bolt. The groove is narrower than the diameter d of the shaft and the head, and tapered as it moves away from the through hole.

US2020/368895A1 discloses that an arm support portion has a through hole portion (window portion) penetrating in the thickness direction between the connecting portion and the attachment portion. The through hole portion is surrounded by the pair of protrusion fixing portions and the connecting portion, and is continuous with a space formed by a step between the thick portion and the thin portion of the attachment portion.

### SUMMARY

The present invention is defined by the independent claims. In the following, parts of the description and drawings referring to examples which do not necessarily comprise all features of the invention as currently claimed are not represented as embodiments of the invention but as examples useful for understanding the embodiments of the invention. Embodiments of this application provide a robot that includes a first member, a second member rotatably coupled to the first member, and a restricting member as defined in the appended claim 1

A robot system includes a robot and a controller controlling the robot, as defined in the appended claim 10.

### BRIEF DESCRIPTION OF THE DRAWINGS

FIG. 1 is a diagram for explanation of a configuration of a robot system.
FIG. 2 is a perspective view showing a base, a first arm, and a second arm of a robot.
FIG. 3 is an enlarged view of a part A in FIG. 2.
FIG. 4 is a perspective view partially showing the robot.
FIG. 5 is a perspective view partially showing the robot.
FIG. 6 is a perspective view partially showing the robot.
FIG. 7 is an exploded perspective view showing the robot and a stopper unit.
FIG. 8 is a front view of the stopper unit as seen along a second axis.
FIG. 9 is an enlarged view of a part B in FIG. 8.
FIG. 10 is a diagram for explanation of an example in which one side of long sides of a long hole shape of a first through hole is tapered.
FIG. 11 is a diagram for explanation of an example in which the long sides of the long hole shape of the first through hole are curved lines.
FIG. 12 is an enlarged view of the part B in FIG. 8.
FIG. 13 is a front view of a stopper unit having a cutout portion.
FIG. 14 is a front view of a stopper unit having the cutout portion and a second cutout portion.
FIG. 15 is a perspective view showing a stopper unit having a thinner portion.

### DESCRIPTION OF EMBODIMENTS

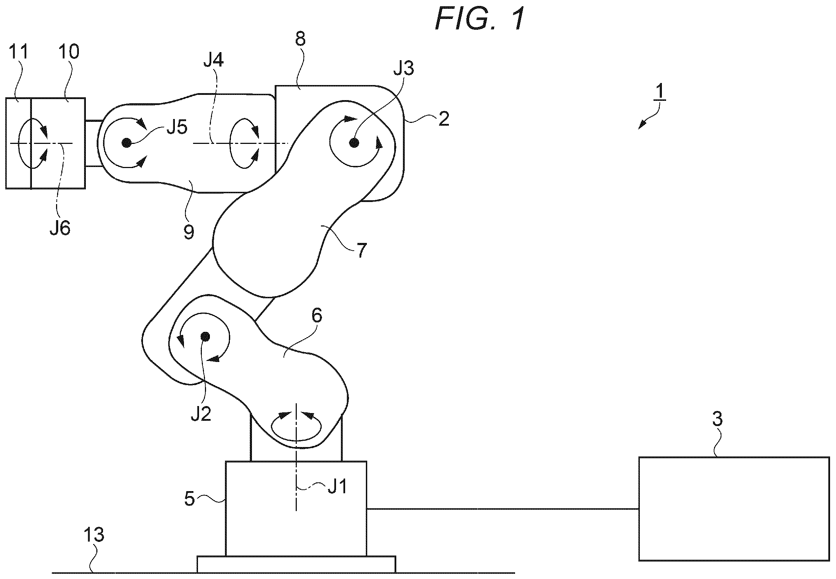

As shown in FIG. 1, a robot system 1 includes a robot 2 and a controller 3. The robot 2 is a kind of vertical articulated robot. The controller 3 controls the robot 2. The robot 2 includes a base 5, a first arm 6, a second arm 7, a third arm 8, a fourth arm 9, a fifth arm 10, and a sixth arm 11. The base 5 is installed on an installation surface 13 of a floor, a workbench, or the like. The first arm 6 is rotatably coupled to the base 5.

The first arm 6 is coupled to the base 5 at an opposite side to the installation surface 13 side of the base 5. The first arm 6 is an example of a first member. The first arm 6 is rotatable around a first axis J1. The second arm 7 is rotatably coupled to the first arm 6. The second arm 7 is coupled to the first arm 6 at an opposite side to the base 5 side of the first arm 6. The second arm 7 is an example of a second member. The second arm 7 is rotatable around a second axis J2. The second axis J2 is a rotation axis of the second arm 7. The third arm 8 is rotatably coupled to the second arm 7. The third arm 8 is coupled to the second arm 7 at an opposite side to the first arm 6 side of the second arm 7. The third arm 8 is rotatable around a third axis J3.

The fourth arm 9 is rotatably coupled to the third arm 8. The fourth arm 9 is coupled to the third arm 8 at an opposite side to the second arm 7 side of the third arm 8. The fourth arm 9 is rotatable around a fourth axis J4. The fifth arm 10 is rotatably coupled to the fourth arm 9. The fifth arm 10 is coupled to the fourth arm 9 at an opposite side to the third arm 8 side of the fourth arm 9. The fifth arm 10 is rotatable around a fifth axis J5.

The sixth arm 11 is rotatably coupled to the fifth arm 10. The sixth arm 11 is coupled to the fifth arm 10 at an opposite side to the fourth arm 9 side of the fifth arm 10. The sixth arm 11 is rotatable around a sixth axis J6. The robot 2 is a six-axis robot having the six rotation axes from the first axis J1 to the sixth axis J6. An end effector (not shown) may be attached to the sixth arm 11. The end effector is detachable from the sixth arm 11. End effectors of types according to various kinds of work may be attached to the robot 2.

The controller 3 is coupled to the robot 2. The robot 2 and the controller 3 can communicate with each other. The controller 3 transmits various control signals to the robot 2. The robot 2 performs various kinds of work based on the control signals received from the controller 3. The coupling between the robot 2 and the controller 3 may be wired or wireless.

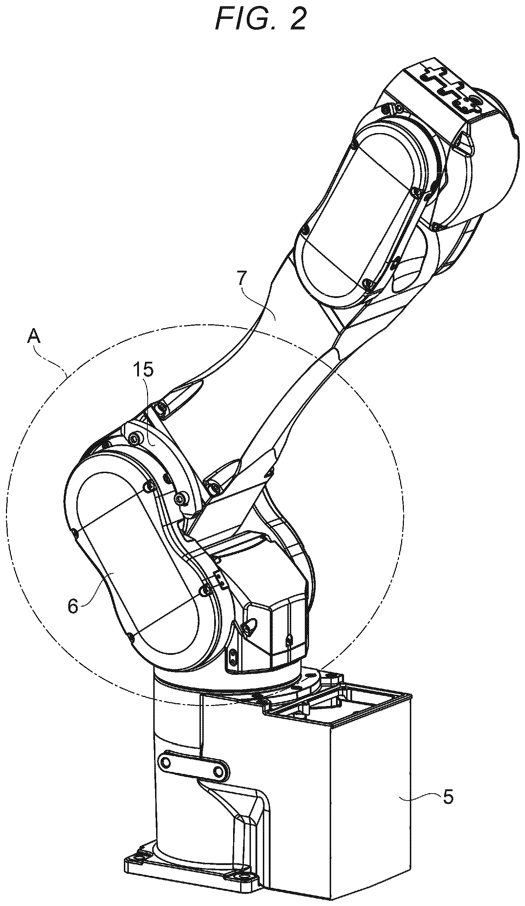

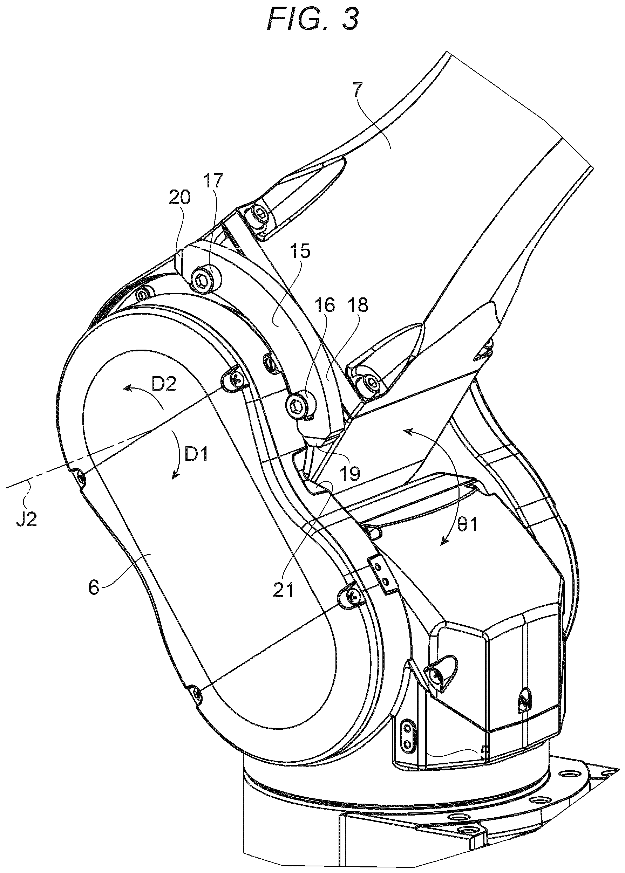

FIG. 2 is a perspective view showing the base 5, the first arm 6, and the second arm 7 of the robot 2. As shown in FIG. 2, the robot 2 has a stopper unit 15. The stopper unit 15 is an example of a restricting member. The stopper unit 15 is provided on the second arm 7. As shown in FIG. 3 as an enlarged view of a part A in FIG. 2, the stopper unit 15 is locked to the second arm 7 by a first bolt 16 and a second bolt 17. The first bolt 16 is an example of a first locking member. The second bolt 17 is an example of a second locking member.

The stopper unit 15 is provided on a surface crossing the second axis J2 of the second arm 7. The stopper unit 15 includes a stopper member 18, a first contact member 19, and a second contact member 20. The stopper member 18 is a rod-shaped plate member formed using a metal. The stopper member 18 is curved in an arc shape as seen along the second axis J2. The stopper member 18 is along an arc around the second axis J2. The first contact member 19 is provided on one end of the arc-shaped stopper member 18. The first contact member 19 is an example of a contact portion.

The second contact member 20 is provided on the other end of the arc-shaped stopper member 18. The first contact member 19 and the second contact member 20 are respectively formed using hard rubber. When the second arm 7 rotates around the second axis J2 and an angle θ1 between the first arm 6 and the second arm 7 reaches a predetermined angle, the first contact member 19 contacts the first arm 6. Note that the angle θ1 is an angle between the first arm 6 and the second arm 7 in a direction from the second contact member 20 toward the first contact member 19. The direction from the second contact member 20 toward the first contact member 19 is referred to as "first direction D1". On the other hand, a direction from the first contact member 19 toward the second contact member 20 is referred to as "second direction D2". The first contact member 19 is located in an end portion of the stopper unit 15 in the first direction D1. The second contact member 20 is located in an end portion of the stopper unit 15 in the second direction D2.

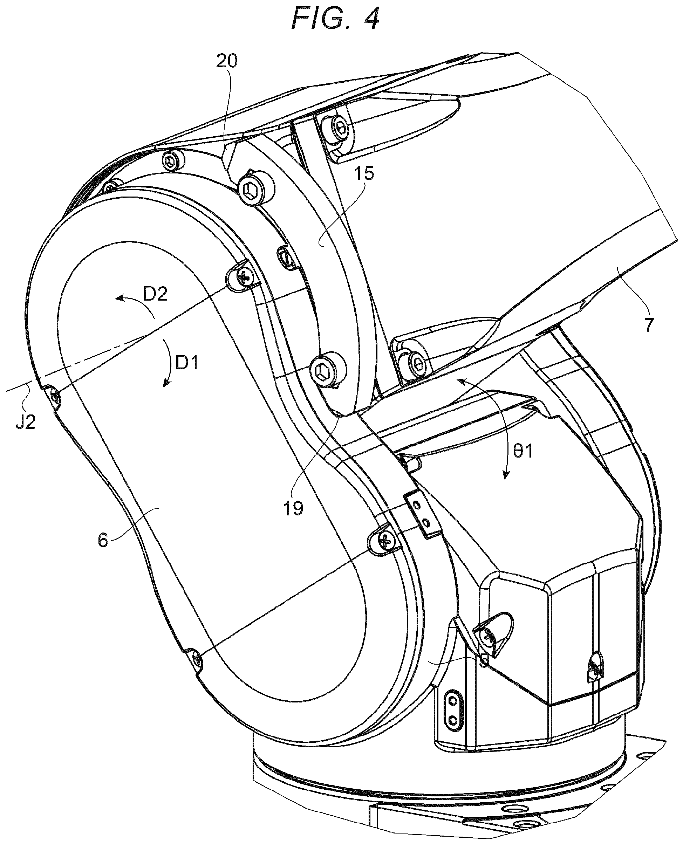

In the first arm 6, a first receiving portion 21 is provided in a position facing the first contact member 19. The first receiving portion 21 is provided in a position that the first contact member 19 faces when the second arm 7 rotates in the first direction D1. The first receiving portion 21 is provided in a concave shape in the first arm 6. As shown in FIG. 4, when the second arm 7 rotates around the second axis J2 in the first direction D1, the first contact member 19 of the stopper unit 15 contacts the first arm 6 before the second arm 7 collides with the first arm 6. That is, when the second arm 7 rotates around the second axis J2 in the first direction D1, the angle θ1 between the first arm 6 and the second arm 7 may be restricted by the stopper unit 15. Thereby, a collision between the first arm 6 and the second arm 7 may be avoided. Note that the first contact member 19 of the stopper unit 15 contacts the first receiving portion 21 of the first arm 6 shown in FIG. 3.

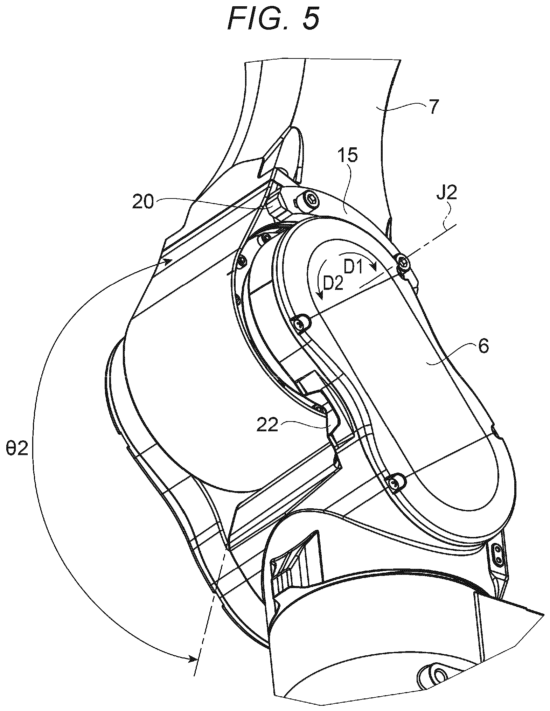

As shown in FIG. 5, in the first arm 6, a second receiving portion 22 is provided in a position facing the second contact member 20. The second receiving portion 22 is provided in a position that the second contact member 20 faces when the second arm 7 rotates in the second direction D2. The second receiving portion 22 is provided in a concave shape in the first arm 6. When the second arm 7 rotates around the second axis J2 in the second direction D2 and an angle θ2 between the first arm 6 and the second arm 7 reaches a predetermined angle, the second contact member 20 contacts the first arm 6. Note that the angle θ2 is an angle between the first arm 6 and the second arm 7 in the direction from the first contact member 19 toward the second contact member 20. That is, the the angle θ2 is an angle between the first arm 6 and the second arm 7 in the second direction D2.

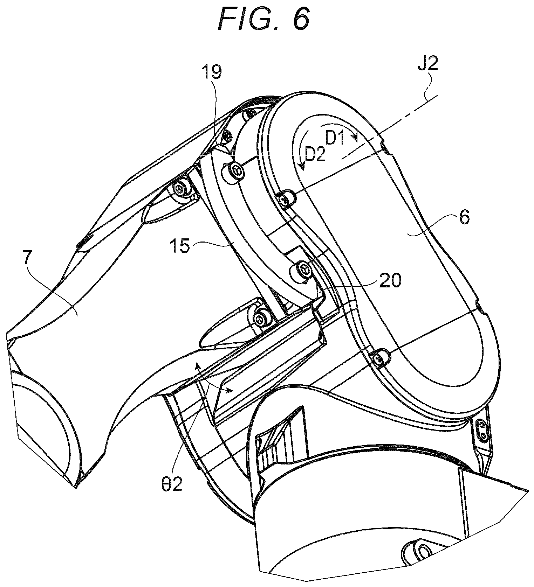

As shown in FIG. 6, when the second arm 7 rotates around the second axis J2 in the second direction D2, the second contact member 20 of the stopper unit 15 contacts the first arm 6 before the second arm 7 collides with the first arm 6. That is, when the second arm 7 rotates around the second axis J2 in the second direction D2, the angle θ2 between the first arm 6 and the second arm 7 may be restricted by the stopper unit 15. Thereby, a collision between the first arm 6 and the second arm 7 may be avoided. Note that the second contact member 20 of the stopper unit 15 contacts the second receiving portion 22 of the first arm 6 shown in FIG. 5.

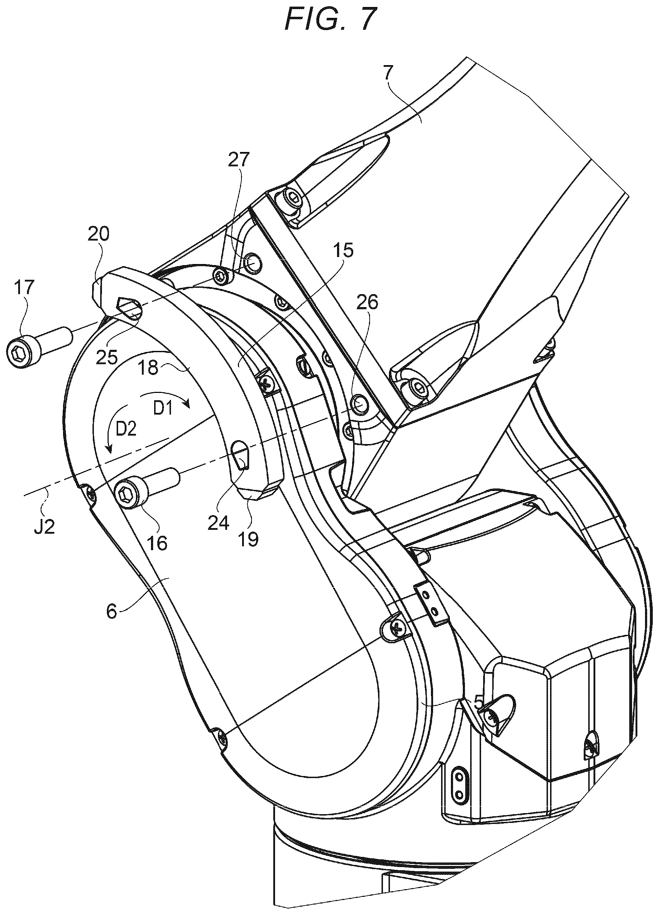

As shown in FIG. 7, a first through hole 24 and a second through hole 25 are formed in the stopper member 18. The first through hole 24 and the second through hole 25 respectively penetrate the stopper member 18 and reach the second arm 7. In the second arm 7, a first screw hole 26 and a second screw hole 27 are formed. The first screw hole 26 overlaps with the first through hole 24 when the stopper member 18 and the second arm 7 are seen along the second axis J2. The second screw hole 27 overlaps with the second through hole 25 when the stopper member 18 and the second arm 7 are seen along the second axis J2. The first bolt 16 is fastened into the first screw hole 26 of the second arm 7 through the first through hole 24 of the stopper member 18. That is, the first bolt 16 locks the stopper unit 15 to the second arm 7 through the first through hole 24.

The second bolt 17 is fastened into the second screw hole 27 of the second arm 7 through the second through hole 25 of the stopper member 18. That is, the second bolt 17 locks the stopper unit 15 to the second arm 7 through the second through hole 25. When the stopper unit 15 and the second arm 7 are seen along the second axis J2, the distance between the first contact member 19 and the first through hole 24 is shorter than the distance between the first contact member 19 and the second through hole 25. That is, the first through hole 24 is located at one end side of the stopper unit 15 in the first direction D1. On the other hand, the second through hole 25 is located at the other end side of the stopper unit 15 in the second direction D2. Accordingly, when the stopper unit 15 and the second arm 7 are seen along the second axis J2, the distance between the first contact member 19 and the first bolt 16 is shorter than the distance between the first contact member 19 and the second bolt 17.

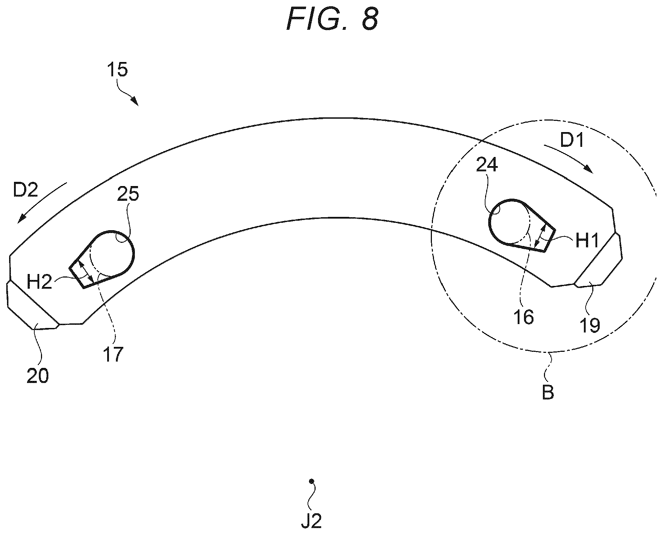

As shown in FIG. 8, the first through hole 24 of the stopper unit 15 is formed in a long hole shape. The long hole shape of the first through hole 24 is a shape longer than the diameter of the first bolt 16 from the first bolt 16 toward the first contact member 19. According to the robot 2, when the first contact member 19 contacts the first arm 6, an impact may be relaxed by a friction between the stopper unit 15 and the first bolt 16. In other words, when the first contact member 19 of the stopper unit 15 contacts the first arm 6, an impact force applied to the first bolt 16 by the stopper unit 15 may be relaxed. Accordingly, the damage on the first arm 6 and the second arm 7 may be reduced.

Further, the second through hole 25 of the stopper unit 15 is formed in a long hole shape. The long hole shape of the second through hole 25 is a shape longer than the diameter of the second bolt 17 from the second bolt 17 toward the second contact member 20. According to the robot 2, when the second contact member 20 contacts the first arm 6, the impact may be relaxed by a friction between the stopper unit 15 and the second bolt 17. In other words, when the second contact member 20 of the stopper unit 15 contacts the first arm 6, an impact force applied to the second bolt 17 by the stopper unit 15 may be relaxed. Accordingly, the damage on the first arm 6 and the second arm 7 may be reduced.

As seen from a direction along the second axis J2, as shown in FIG. 8, the long hole shape of the first through hole 24 extends along the first direction D1. According to the configuration, the extension direction of the long hole shape of the first through hole 24 is easily aligned with a direction of a force acting on the stopper unit 15 when the first contact member 19 contacts the first arm 6. Accordingly, the impact force applied to the first bolt 16 by the stopper unit 15 may be relaxed. Similarly, as seen from the direction along the second axis J2, the long hole shape of the second through hole 25 extends along the second direction D2. According to the configuration, the extension direction of the long hole shape of the second through hole 25 is easily aligned with a direction of a force acting on the stopper unit 15 when the second contact member 20 contacts the first arm 6. Accordingly, the impact force applied to the second bolt 17 by the stopper unit 15 may be relaxed.

As seen from the direction along the second axis J2, as shown in FIG. 8, the first through hole 24 has a width dimension H1 in a direction crossing the extension direction of the long hole shape smaller from the first bolt 16 toward the first contact member 19. When the first contact member 19 contacts the first arm 6, a force in the second direction D2 is applied to the stopper unit 15 by the first arm 6. Accordingly, the stopper unit 15 tends to be displaced in the second direction D2 relative to the second arm 7. Concurrently, the first bolt 16 may deform the stopper member 18 in a direction in which the width dimension H1 of the first through hole 24 is increased. Accordingly, the impact force applied to the first bolt 16 by the stopper unit 15 may be relaxed.

Similarly, as seen from the direction along the second axis J2, the second through hole 25 has a width dimension H2 in a direction crossing the extension direction of the long hole shape smaller from the second bolt 17 toward the second contact member 20. When the second contact member 20 contacts the first arm 6, a force in the first direction D1 is applied to the stopper unit 15 by the first arm 6. Accordingly, the stopper unit 15 tends to be displaced in the first direction D1 relative to the second arm 7. Concurrently, the second bolt 17 may deform the stopper member 18 in a direction in which the width dimension H2 of the second through hole 25 is increased. Accordingly, the impact force applied to the second bolt 17 by the stopper unit 15 may be relaxed.

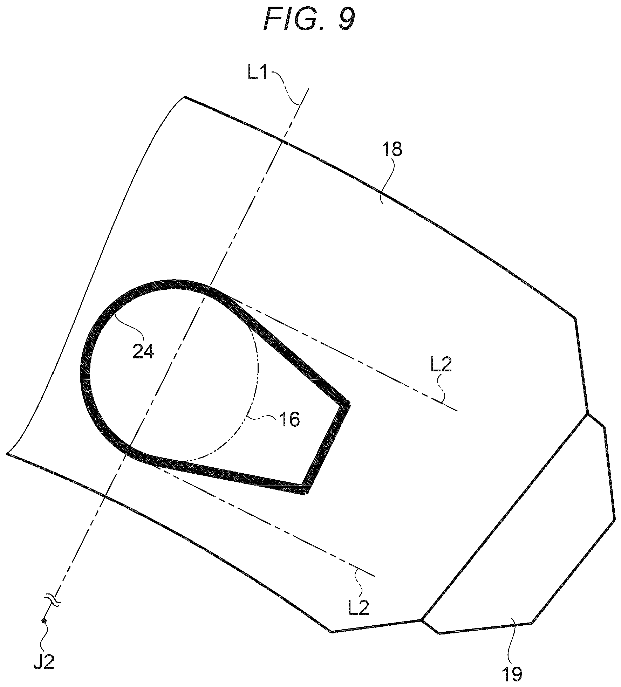

In the embodiment, the long sides of the long hole shape of the first through hole 24 are tapered on both sides. As shown in FIG. 9 as an enlarged view of a part B in FIG. 8, "tapered on both sides" refers to a state in which both of two long sides of the long hole shape are inclined relative to tangent lines L2. The tangent lines L2 are tangent lines of the first through hole 24 at intersections between a line segment L1 and the first through hole 24. The line segment L1 is a straight line passing through the center of the first bolt 16 from the position of the second axis J2 and crossing the stopper member 18. Similarly, the long sides of the long hole shape of the second through hole 25 shown in FIG. 8 are tapered on both sides.

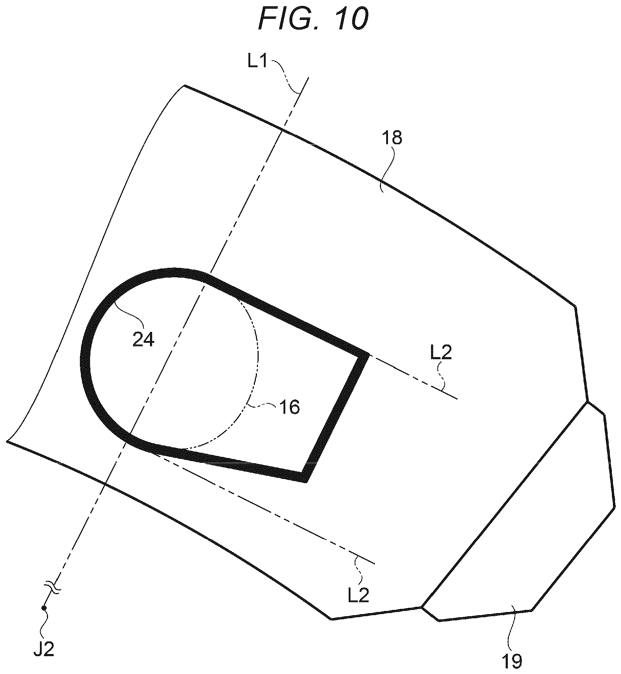

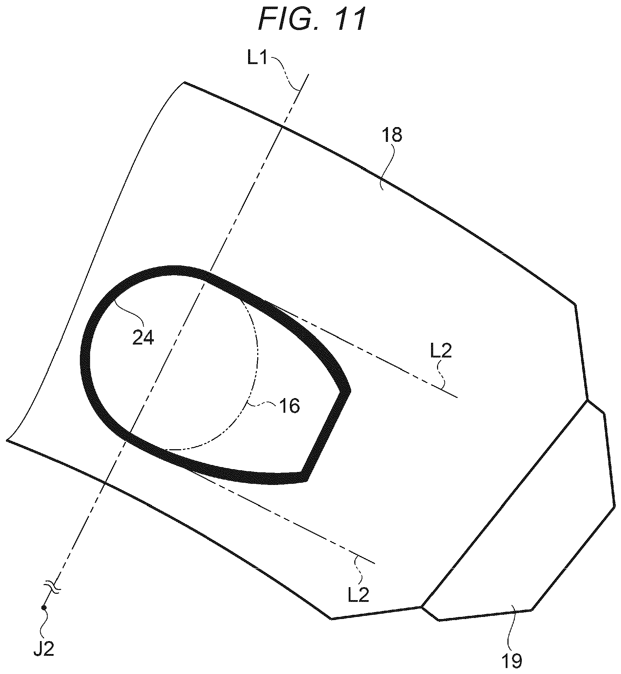

The long sides of the long hole shapes of the first through hole 24 and the second through hole 25 are not limited to those tapered on both sides. As shown in FIG. 10, the long sides of the long hole shapes of the first through hole 24 and the second through hole 25 may be respectively tapered on one sides. "Tapered on one side" refers to a state in which one of the two long sides of the long hole shape is tapered and the other of the long sides extends along the tangent line L2. In "tapered on one side", either of the two long sides of the long hole shape may be tapered. Even when one side of the long sides of the long hole shape is tapered, the same effect as that of "tapered on both sides" may be obtained. Further, the two long sides of the long hole shape are not limited to the straight lines. As shown in FIG. 11, the two long sides of the long hole shape may be curved lines. A configuration in which one of the two long sides of the long hole shape is a curved line and the other is a straight line may be applied. As the curved line forming the long side, e.g., an arc is applied. Even in a configuration in which at least one of the two long sides of the long hole shape is a curved line, the same effect as that of "tapered on both sides" may be obtained.

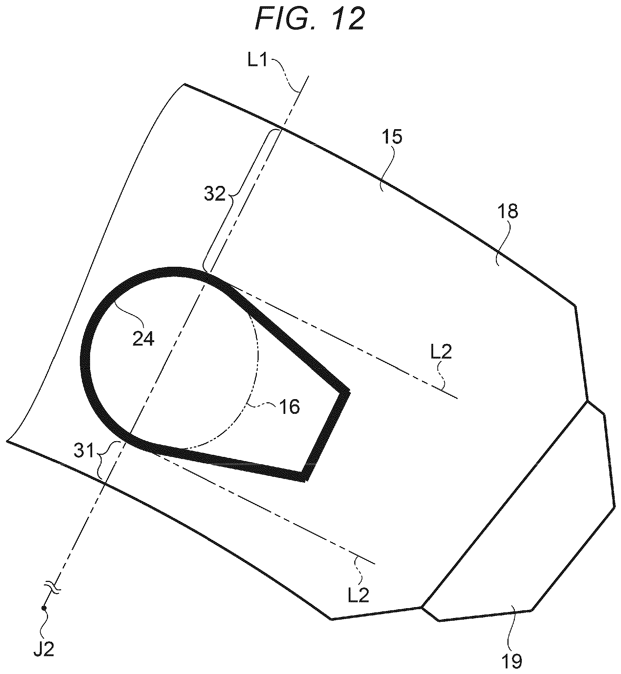

As shown in FIG. 12, in the embodiment, of parts in which the line segment L1 and the stopper unit 15 overlap, the dimension of a first part 31 is smaller than the dimension of a second part 32. As described above, the line segment L1 is the straight line passing through the center of the first bolt 16 from the position of the second axis J2 and crossing the stopper member 18. Accordingly, the line segment L1 crosses the stopper unit 15 from the second axis J2 via the first through hole 24 as seen from the direction along the second axis J2. The first part 31 is a part between the first through hole 24 and the second axis J2 of the parts in which the line segment L1 and the stopper unit 15 overlap. The second part 32 is a part in a position over the first through hole 24 from the second axis J2. When the second axis J2 side of the first through hole 24 is referred to as "inner side", the first part 31 is located at the inner side of the first through hole 24. The second part 32 is located at an outer side of the first part 31 as seen from the position of the second axis J2.

When the first contact member 19 contacts the first arm 6, a force is applied to the first bolt 16 outward around the second bolt 17 as a point of support by the stopper member 18. In the embodiment, the dimension of the first part 31 located at the inner side of the first through hole 24 is smaller than the dimension of the second part 32 located at the outer side of the first through hole 24. In the stopper unit 15, the rigidity of the first part 31 is lower than the rigidity of the second part 32. According to the configuration, when the first bolt 16 deforms the stopper member 18 in a direction in which the width dimension of the first through hole 24 is increased, the deformation of the first part 31 may be made larger than that of the second part 32. Accordingly, an impact force applied to the first arm 6 outward by the first bolt 16 may be relaxed.

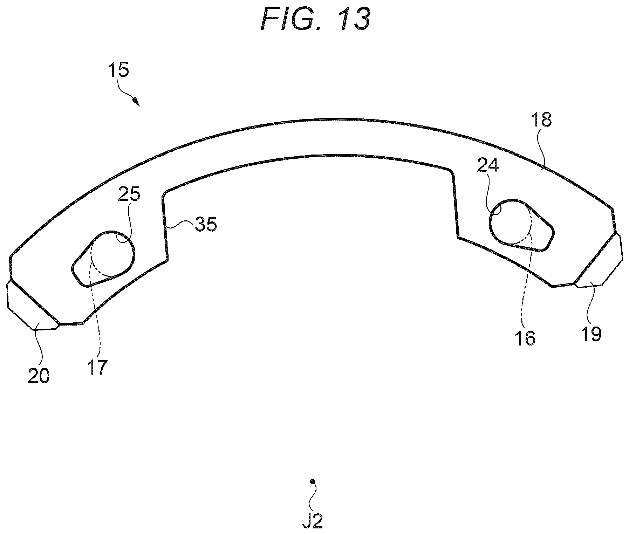

In the stopper unit 15, as shown in FIG. 13, a configuration having a cutout portion 35 may be applied. The cutout portion 35 is an example of a first cutout portion. The cutout portion 35 is formed in the stopper member 18. The cutout portion 35 is formed between the first through hole 24 and the second through hole 25. In other words, the cutout portion 35 is formed between the first bolt 16 and the second bolt 17. According to the configuration, when the first contact member 19 of the stopper unit 15 contacts the first arm 6, the stopper unit 15 is easily deformed in the cutout portion 35. Therefore, the impact force applied to the first bolt 16 by the stopper unit 15 may be relaxed by the deformation in the cutout portion 35.

The cutout portion 35 is formed at the second axis J2 side of the stopper member 18. The cutout portion 35 is formed at the second axis J2 side as a rotation center of the second arm 7. That is, the cutout portion 35 is formed at the rotation center side of the second arm 7. The cutout portion 35 is formed in an orientation concave outward from the second axis J2 side of the stopper member 18. When the first contact member 19 collides with the first arm 6, a force is applied to the stopper unit 15 by the first arm 6. The force applied to the stopper unit 15 by the first arm 6 acts in a direction in which the stopper unit 15 is compressed around the second bolt 17 as a point of support. Since the cutout portion 35 is formed at the second axis J2 side of the stopper member 18, the stopper unit 15 is easily bent in the cutout portion 35 around the second bolt 17 as a point of support. Therefore, the impact force applied to the first bolt 16 by the stopper unit 15 is easily relaxed by the deformation in the cutout portion 35.

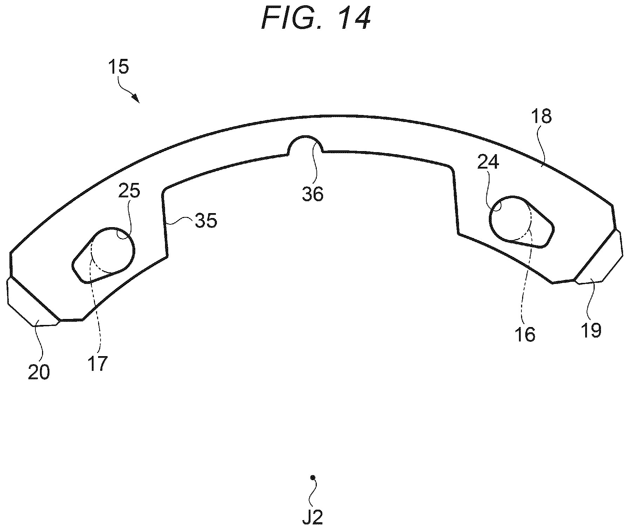

In the stopper unit 15, as shown in FIG. 14, a configuration having the cutout portion 35 and a second cutout portion 36 may be applied. The cutout portion 35 has the same configuration as that in the example shown in FIG. 13. The second cutout portion 36 is formed in the stopper member 18. The second cutout portion 36 is formed at an inner side of the cutout portion 35. The second cutout portion 36 is formed in an orientation concave outward from the second axis J2 side at the inner side of the cutout portion 35. According to the configuration, since the cutout portion 35 and the second cutout portion 36 are provided, the stopper unit 15 is bent more easily in the cutout portion 35 around the second bolt 17 as a point of support. As a result, the impact force applied to the first bolt 16 by the stopper unit 15 is more easily relaxed.

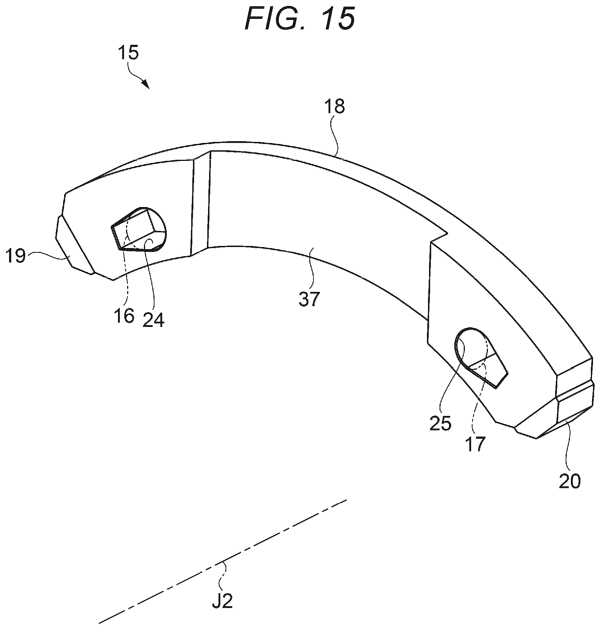

In the stopper unit 15, as shown in FIG. 15, a configuration having a thinner portion 37 as a portion having a smaller thickness may be applied. The thinner portion 37 is formed in the stopper member 18. The thinner portion 37 is formed between the first through hole 24 and the second through hole 25. In other words, the thinner portion 37 is formed between the first bolt 16 and the second bolt 17. According to the configuration, when the first contact member 19 of the stopper unit 15 contacts the first arm 6, the stopper unit 15 is easily deformed in the thinner portion 37. Therefore, the impact force applied to the first bolt 16 by the stopper unit 15 may be relaxed by the deformation in the thinner portion 37.

A configuration in which the thinner portion 37 is formed in the stopper unit 15 having the cutout portion 35 shown in FIG. 13 may be applied. According to the configuration, the impact force applied to the first bolt 16 by the stopper unit 15 may be further relaxed by the deformation in the cutout portion 35 and the thinner portion 37. Further, a configuration in which the thinner portion 37 is formed in the stopper unit 15 having the cutout portion 35 and the second cutout portion 36 shown in FIG. 14 may be applied. According to the configuration, the impact force applied to the first bolt 16 by the stopper unit 15 may be further relaxed by the deformation in the cutout portion 35, the second cutout portion 36, and the thinner portion 37.

In the explanation of the robot system 1, the first arm 6 is the example of the first member and the second arm 7 is the example of the second member. However, in the robot system 1, the second arm 7 may be an example of the first member and the first arm 6 may be an example of the second member. In this case, the stopper unit 15 is provided in the first arm 6. Further, in this case, the first receiving portion 21 and the second receiving portion 22 are provided in the second arm 7.

In the robot system 1, the configuration in which the stopper unit 15 is provided in the second arm 7 is applied. However, a configuration in which the stopper unit 15 is provided in the third arm 8 may be applied. In this case, the third arm 8 corresponds to the second member and the second arm 7 corresponds to the first member. Further, in this case, the first receiving portion 21 and the second receiving portion 22 are provided in the second arm 7.

Furthermore, a configuration in which the stopper unit 15 is provided in the second arm 7 and the first receiving portion 21 and the second receiving portion 22 are provided in the third arm 8 may be applied. In this case, the third arm 8 corresponds to the first member and the second arm 7 corresponds to the second member. In addition, a configuration in which the stopper units 15 are provided in both the second arm 7 and the third arm 8 may be applied.

The long hole shapes of the first through hole 24 and the second through hole 25 may be e.g., oval shapes or rectangular shapes as long as frictions are respectively generated between the stopper unit 15 and the first bolt 16 and second bolt 17.

Further, the long hole shapes of the first through hole 24 and the second through hole 25 may extend along e.g., a tangential direction or a radial direction of a circle around the second axis J2 as long as the long hole shapes extend along directions in which frictions are respectively generated between the stopper unit 15 and the first bolt 16 and second bolt 17.

The second through hole 25 may have e.g., a circular shape, not the long hole shape. Further, the second through hole 25 may be a cutout formed at an end of the plate-like stopper member 18.

Or, the second through hole 25 is not necessarily formed in the stopper member 18. In this case, the second locking member may be e.g., a hook caught on the stopper member 18, or a structure nipping and holding the stopper member 18.

Or, the first locking member and the second locking member may be pins.

The robot 2 is not limited to the vertical articulated robot. The robot 2 may be a horizontal articulated robot.

## Claims

1. A robot (2) comprising:
a first member (6);
a second member (7) coupled rotatably around a rotation axis (J2) to the first member (6);
a restricting member (15) having a stopper member (18), a first contact portion (19), and a second contact portion (20); wherein, the stopper member (18) is a rod-shaped plate member formed using a metal, and the stopper member (18) is curved in an arc shape as seen from a direction along the rotation axis (J2), a first through hole (24) and a second through hole (25) are formed in the stopper member (18), the first contact portion (19) is on one end of the arc-shaped stopper member (18), and the second contact portion (20) is on the other end of the arc-shaped stopper member (18); wherein, the first contact portion (19) is in contact with the first member (6) when an angle between the first member (6) and the second member (7) in a first direction (D1) is a first predetermined angle, and the second contact portion (20) is in contact with the first member (6) at an opposite side to the first contact portion (19) when an angle between the first member (6) and the second member (7) in a second direction (D2) is a second predetermined angle; wherein, the first direction (D1) is a direction from the second contact member (20) toward the first contact member (19), and the second direction (D2) is a direction from the first contact member (19) toward the second contact member (20);
a first locking member (16) passing through the first through hole (24) and locking the restricting member (15) to the second member (7); and
a second locking member (17) passing through the second through hole (25) and locking the restricting member (15) to the second member (7), wherein
as seen from a direction along the rotation axis (J2),
a distance between the first contact portion (19) and the first locking member (16) is shorter than a distance between the first contact portion (19) and the second locking member (17), and
a length of the first through hole (24) in a direction from the first locking member (16) to the first contact portion (19) is longer than a diameter of the first locking member (16).

2. The robot (2) according to claim 1, wherein
as seen from the direction along the rotation axis (J2),
a length of the first through hole (24) in a direction along a rotation direction around the rotation axis (J2) is longer than the diameter of the first locking member (16).

3. The robot (2) according to claim 2, wherein
as seen from the direction along the rotation axis (J2),
a width of the first through hole (24) in a direction crossing the direction along the rotation direction is smaller from the first locking member (16) toward the first contact portion (19).

4. The robot (2) according to claim 3, wherein
as seen from the direction along the rotation axis (J2),
a shape of a part of the first through hole (24) is tapered on one side, tapered on both sides, or an arc shape.

5. The robot (2) according to claim 3, wherein
as seen from the direction along the rotation axis (J2),
when a line segment (L1) crossing the restricting member (15) from the rotation axis (J2) via the first through hole (24) is drawn, of parts in which the line segment (L1) and the restricting member (15) overlap, a dimension of a first part between the first through hole (24) and the rotation axis (J2) is smaller than a dimension of a second part in a position over the first through hole (24) from the rotation axis (J2).

6. The robot (2) according to claim 1, wherein
a cutout portion (35) is provided between the first locking member (16) and the second locking member (17) in the restricting member (15).

7. The robot (2) according to claim 6, wherein
with the cutout portion (35) as a first cutout portion (35), a second cutout portion (36) is provided at an inner side of the first cutout portion (35).

8. The robot (2) according to claim 6, wherein
the cutout portion (35) is provided at a rotation center side of the second member (7) of the restricting member (15).

9. The robot (2) according to claim 1, wherein
the restricting member (15) has a portion (37) having a smaller thickness between the first locking member (16) and the second locking member (17).

10. A robot system (1) comprising a robot (2) according to any one of claims 1 to 9, wherein the robot system includes a controller (3) controlling the robot (2).

## Patentansprüche

1. Roboter (2), umfassend:
ein erstes Element (6);
ein zweites Element (7), das drehbar um eine Drehachse (J2) an das erste Element (6) gekoppelt ist;
ein Begrenzungselement (15) mit einem Anschlagelement (18), einem ersten Kontaktabschnitt (19) und einem zweiten Kontaktabschnitt (20); wobei das Anschlagelement (18) ein stabförmiges Plattenelement ist, das unter Verwendung eines Metalls gebildet ist, und das Anschlagelement (18) eine gekrümmte Bogenform aufweist, wenn aus einer Richtung entlang der Drehachse (J2) betrachtet, ein erstes Durchgangsloch (24) und ein zweites Durchgangsloch (25) in dem Anschlagelement (18) gebildet sind, der erste Kontaktabschnitt (19) sich an einem Ende des bogenförmigen Anschlagelements (18) befindet und der zweite Kontaktabschnitt (20) sich an dem anderen Ende des bogenförmigen Anschlagelements (18) befindet; wobei der erste Kontaktabschnitt (19) in Kontakt mit dem ersten Element (6) ist, wenn ein Winkel zwischen dem ersten Element (6) und dem zweiten Element (7) in einer ersten Richtung (D1) ein erster vorbestimmter Winkel ist, und der zweite Kontaktabschnitt (20) in Kontakt mit dem ersten Element (6) an einer zu dem ersten Kontaktabschnitt (19) entgegengesetzten Seite ist, wenn ein Winkel zwischen dem ersten Element (6) und dem zweiten Element (7) in einer zweiten Richtung (D2) ein erster vorbestimmter Winkel ist; wobei die erste Richtung (D1) eine Richtung von dem zweiten Kontaktelement (20) zu dem ersten Kontaktelement (19) ist und die zweite Richtung (D2) eine Richtung von dem ersten Kontaktelement (19) zu dem zweiten Kontaktelement (20) ist;
ein erstes Verriegelungselement (16), das durch das erste Durchgangsloch (24) geht und das Begrenzungselement (15) mit dem zweiten Element (7) verriegelt; und
ein zweites Verriegelungselement (17), das durch das zweite Durchgangsloch (25) geht und das Begrenzungselement (15) mit dem zweiten Element (7) verriegelt, wobei
betrachtet aus einer Richtung entlang der Drehachse (J2),
ein Abstand zwischen dem ersten Kontaktabschnitt (19) und dem ersten Verriegelungselement (16) kürzer ist als ein Abstand zwischen dem ersten Kontaktabschnitt (19) und dem zweiten Verriegelungselement (17) und
eine Länge des ersten Durchgangslochs (24) in einer Richtung von dem ersten Verriegelungselement (16) zu dem ersten Kontaktabschnitt (19) länger ist als ein Durchmesser des ersten Verriegelungselements (16).

2. Roboter (2) nach Anspruch 1, wobei
betrachtet aus der Richtung entlang der Drehachse (J2),
eine Länge des ersten Durchgangslochs (24) in einer Richtung entlang einer Drehrichtung um die Drehachse (J2) länger ist als der Durchmesser des ersten Verriegelungselements (16).

3. Roboter (2) nach Anspruch 2, wobei
betrachtet aus der Richtung entlang der Drehachse (J2),
eine Breite des ersten Durchgangslochs (24) in einer Richtung, die die Richtung entlang der Drehrichtung quert, von dem ersten Verriegelungselement (16) zu dem ersten Kontaktabschnitt (19) kleiner ist.

4. Roboter (2) nach Anspruch 3, wobei
betrachtet aus der Richtung entlang der Drehachse (J2),
eine Form eines Teils des ersten Durchgangslochs (24) an einer Seite verjüngt ist, an beiden Seiten verjüngt ist oder eine Bogenform ist.

5. Roboter (2) nach Anspruch 3, wobei
betrachtet aus der Richtung entlang der Drehachse (J2),
wenn ein Liniensegment (L1), das das Begrenzungselement (15) von der Drehachse (J2) über das erste Durchgangsloch (24) quert, gezeichnet wird, von Teilen, in welchen das Liniensegment (L1) und das Begrenzungselement (15) überlappen, eine Dimension eines ersten Teils zwischen dem ersten Durchgangsloch (24) und der Drehachse (J2) kleiner ist als eine Dimension eines zweiten Teils an einer Position über dem ersten Durchgangsloch (24) von der Drehachse (J2).

6. Roboter (2) nach Anspruch 1, wobei
ein ausgeschnittener Abschnitt (35) zwischen dem ersten Verriegelungselement (16) und dem zweiten Verriegelungselement (17) in dem Begrenzungselement (15) vorgesehen ist.

7. Roboter (2) nach Anspruch 6, wobei
Mit dem ausgeschnittenen Abschnitt (35) als einen ersten ausgeschnittenen Abschnitt (35) ein zweiter ausgeschnittener Abschnitt (36) an einer Innenseite des ersten ausgeschnittenen Abschnitts (35) vorgesehen ist.

8. Roboter (2) nach Anspruch 6, wobei
der ausgeschnittene Abschnitt (35) an einer Drehmittelpunktseite des zweiten Elements (7) des Begrenzungselements (15) vorgesehen ist.

9. Roboter (2) nach Anspruch 1, wobei
das Begrenzungselement (15) einen Abschnitt (37) mit einer geringeren Dicke zwischen dem ersten Verriegelungselement (16) und dem zweiten Verriegelungselement (17) aufweist.

10. Robotersystem (1), umfassend einen Roboter (2) nach einem der Ansprüche 1 bis 9, wobei das Robotersystem eine Steuereinheit (3) enthält, die den Roboter (2) steuert.

## Revendications

1. Robot (2) comprenant :
un premier élément (6) ;
un deuxième élément (7) accouplé de façon rotative au premier élément (6) autour d'un axe de rotation (J2) ;
un élément de limitation (15) comportant un élément de butée (18), une première partie de contact (19), et une deuxième partie de contact (20) ; dans lequel l'élément de butée (18) est un élément en plaque en forme de tige formé à l'aide d'un métal, et l'élément de butée (18) est courbé en forme d'arc, vu depuis une direction le long de l'axe de rotation (J2), un premier trou traversant (24) et un deuxième trou traversant (25) sont formés dans l'élément de butée (18), la première partie de contact (19) se trouve à une extrémité de l'élément de butée en forme d'arc (18), et la deuxième partie de contact (20) se trouve à l'autre extrémité de l'élément de butée en forme d'arc (18) ; dans lequel la première partie de contact (19) est en contact avec le premier élément (6) lorsqu'un angle entre le premier élément (6) et le deuxième élément (7) dans une première direction (D1) est un premier angle prédéterminé, et la deuxième partie de contact (20) est en contact avec le premier élément (6) sur un côté opposé à la première partie de contact (19) lorsqu'un angle entre le premier élément (6) et le deuxième élément (7) dans une deuxième direction (D2) est un deuxième angle prédéterminé ; dans lequel la première direction (D1) est une direction allant du deuxième élément de contact (20) vers le premier élément de contact (19), et la deuxième direction (D2) est une direction allant du premier élément de contact (19) vers le deuxième élément de contact (20) ;
un premier élément de verrouillage (16) traversant le premier trou traversant (24) et verrouillant l'élément de limitation (15) sur le deuxième élément (7) ; et
un deuxième élément de verrouillage (17) traversant le deuxième trou traversant (25) et verrouillant l'élément de limitation (15) sur le deuxième élément (7), dans lequel
vue depuis une direction le long de l'axe de rotation (J2),
une distance entre la première partie de contact (19) et le premier élément de verrouillage (16) est plus courte qu'une distance entre la première partie de contact (19) et le deuxième élément de verrouillage (17), et
une longueur du premier trou traversant (24) dans une direction allant du premier élément de verrouillage (16) à la première partie de contact (19) est supérieure à un diamètre du premier élément de verrouillage (16).

2. Robot (2) selon la revendication 1, dans lequel
vue depuis la direction le long de l'axe de rotation (J2),
une longueur du premier trou traversant (24) dans une direction le long d'une direction de rotation autour de l'axe de rotation (J2) est supérieure au diamètre du premier élément de verrouillage (16).

3. Robot (2) selon la revendication 2, dans lequel
vue depuis la direction le long de l'axe de rotation (J2),
une largeur du premier trou traversant (24) dans une direction coupant la direction le long de la direction de rotation est plus petite à partir du premier élément de verrouillage (16) vers la première partie de contact (19) .

4. Robot (2) selon la revendication 3, dans lequel
vue depuis la direction le long de l'axe de rotation (J2),
une forme d'une partie du premier trou traversant (24) est conique sur un côté, conique sur les deux côtés, ou en forme d'arc.

5. Robot (2) selon la revendication 3, dans lequel
vue depuis la direction le long de l'axe de rotation (J2),
lorsqu'un segment de ligne (L1) coupant l'élément de limitation (15) à partir de l'axe de rotation (J2) via le premier trou traversant (24) est tracée, de parties dans lesquelles le segment de ligne (L1) et l'élément de limitation (15) se chevauchent, une dimension d'une première partie entre le premier trou traversant (24) et l'axe de rotation (J2) est plus petite qu'une dimension d'une deuxième partie dans une position au-dessus du premier trou traversant (24) à partir de l'axe de rotation (J2).

6. Robot (2) selon la revendication 1, dans lequel
une partie découpée (35) est prévue entre le premier élément de verrouillage (16) et le deuxième élément de verrouillage (17) dans l'élément de limitation (15).

7. Robot (2) selon la revendication 6, dans lequel
avec la partie découpée (35) comme première partie découpée (35), une deuxième partie découpée (36) est prévue sur un côté intérieur de la première partie découpée (35).

8. Robot (2) selon la revendication 6, dans lequel
la partie découpée (35) est prévue sur un côté de centre de rotation du deuxième élément (7) de l'élément de limitation (15).

9. Robot (2) selon la revendication 1, dans lequel
l'élément de limitation (15) comporte une partie (37) présentant une plus petite épaisseur entre le premier élément de verrouillage (16) et le deuxième élément de verrouillage (17).

10. Système de robot (1) comprenant un robot (2) selon l'une quelconque des revendications 1 à 9, dans lequel le système de robot inclut un moyen de commande (3) commandant le robot (2).
